# EUROPEAN PATENT APPLICATION

(11) **EP 1 783 598 A1**
(43) Date of publication of application: **09.05.2007**
(21) Application number: 05023903.7
(22) Date of filing: 02.11.2005
(51) Int. Cl.: G06F 3/14

(54) **Integrated teaching base station**

(71) Applicant: Tseng, Hsin-Tung, San Chung City, Taipei Hsien (TW)
(72) Inventor: Tseng, Hsin-Tung, San Chung City, Taipei Hsien (TW)
(74) Representative: Casalonga, Axel

(57) **Abstract**

An integrated teaching base station, especially at least two interactive digital display teaching base stations (30) located at different teaching and training sites (S), the one within is a first personal digital display base system (32A), the other one at a remote terminal is the second personal digital display base system (32B). Via broadband internet connection (40), teaching materials can be transmitted among the interactive digital display teaching base stations (30) and can be accessed and displayed at any time. The teaching base stations can be further combined with an audio/video surveillance module (60), an audio/video data integration module (70) and a network audio/video data communication module (80) to form the interactive digital display audio/video teaching base station (50) that can be used to record and store teaching data at the first personal digital data base system (32A). Multimedia mobile communication device (94) can be used to connect the interactive digital display audio/video teaching base station (50) so as to observe the class at the teaching and training sites (S) in order to enhance understanding and communication. In addition, it can be used to establish a terrarium module (102a), an aquatic module (102b), a zoology module (102c), etc, at the teaching and training site (S). This together with the interactive digital display audio/video teaching base station (50) forms an interactive digital display audio/video lab environment teaching base station. A remote second personal digital data base system (32B) connects with multiple labs, operation room for clinical teaching, etc. In this way, open and detailed observations and discussions can be conducted to promote the best results in observation, research and teaching.

## Description

The invention relates to an integrated teaching base station, in particular an interactive digital display teaching device with a large, flat self-luminescent display unit used in the teaching and training site. The device can link up to broadband internet connection and is installed with audio/video function and multi-media mobile communication unit.

### 2. Description of the prior Art

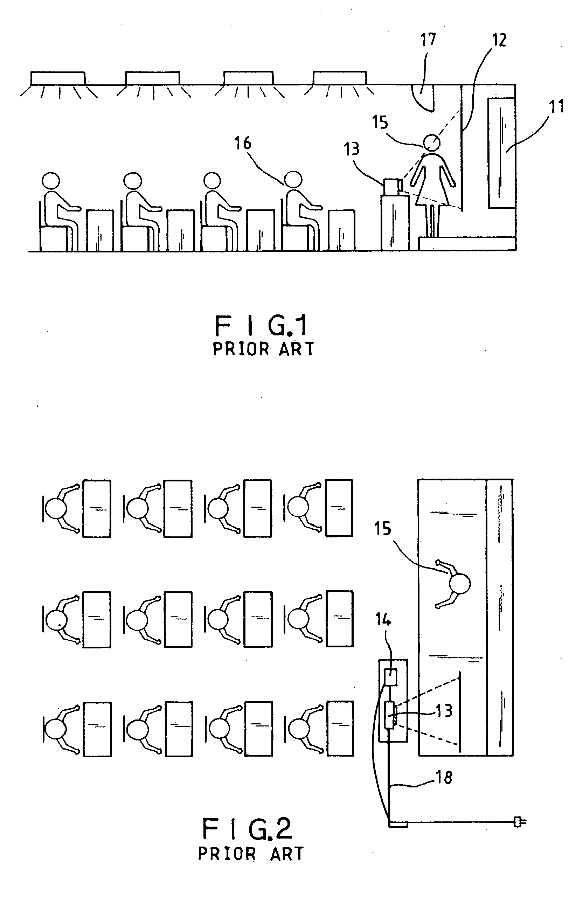

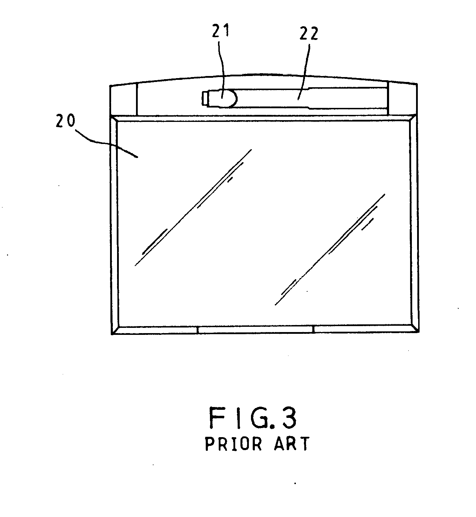

Please refer to FIG. 1 and 2. Conventional teaching equipment often includes a whiteboard 11 that is fixed on the front wall of the classroom, a pull-down screen 12 that is installed above the whiteboard, a projector 13 that is placed in front of the screen 12 and a notebook computer 14 that is connected to the projector 13. The teacher 15 needs to move back and forth to operate the computer and change the teaching contents displayed by the projector while avoiding the projector's 13 strong light beams that can cause discomfort. The students 16 on the other hand are blocked by the teacher and therefore cannot see the projected contents on the screen 12. Lights 17 above the whiteboard 11 are switched off for clear projection visuals; however when the teacher 15 uses the digital teaching equipment and the whiteboard simultaneously, the resultant excessive brightness or darkness will cause discomfort to the students. If this continues for a long time, both the teacher and the students will easily tire and the overall teaching quality and learning results will be significantly affected. In addition lays the worry of tangled wires 18 often causing the projector 13 and the notebook computer 18 to drop to the floor.

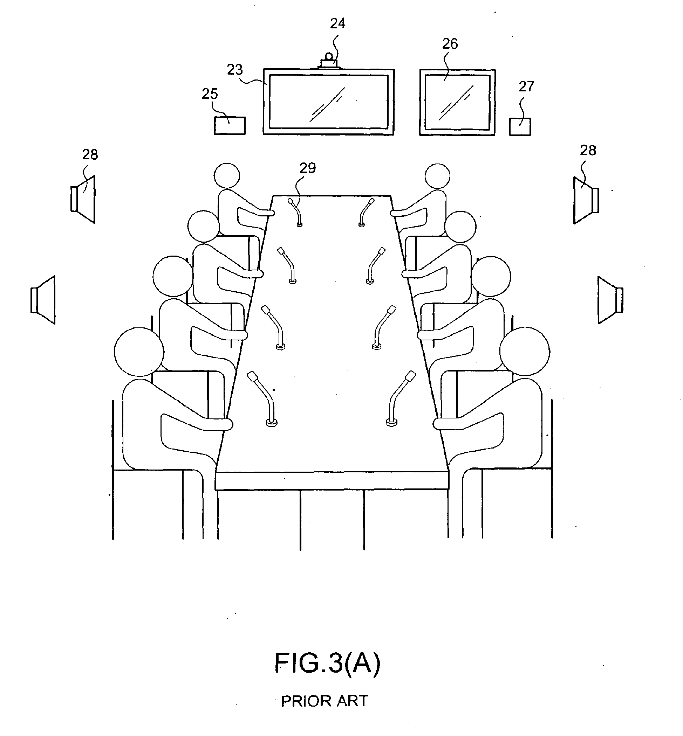

FIG. 3 shows a more modem approach. The projector 21 is fixed on a cantilever 22 that is in turn attached to whiteboard 20. The same whiteboard is used as both a projection screen as well as and an electronic board, hence it cannot be used if additional notes need to be made on the projected data and more space is needed to show the explanation. In this case the projector 21 has to be turned off so as to use the electronic whiteboard. This approach differs slightly from the former application, but other inconveniences remain.

In the above-mentioned technology, the teacher 15 has to prepare the teaching materials in his office, dormitory and home or at other locations and thereafter carry the notebook computer 14, disks, CDs and other software or hardware with him to classes. It poses inconvenience in addition to the hassle of maintaining the various items when not in use, the problem of bringing incomplete materials and limited storage space at the teaching materials' central data server.

FIG. 3A shows a more up-to-date audio/video approach (including a video camera, a loudspeaker system, a microphone system, two display screens, etc.). A display screen 23 is placed in the front with a projector 24 fixed above it and audio/video conference equipment 25 is provided next to the display screen 23. A second screen 26 is also placed in the front with connection to a personal computer 27. Surrounding loudspeakers 28 are installed in the meeting room and microphones 29 are placed in front of each attendant. In this way, meetings can be held with an MCU (multi-point control unit) audio/video conference system that allows documents to be read on the screen via the computer. However, the meeting contents and documents cannot be collated into a single file and requires separate computer system to operate. Inconvenience arises as a result of disorganized file management after the meeting.

The first objective of the invention is to make improvements on the disadvantages of the commonly used technology while providing an integrated teaching base station combined with broadband internet to connect a first personal digital data base system with a remote second personal digital data base system. In this way, the personal digital teaching materials prepared by the teacher at home or in office can be transferred directly to and displayed on the interactive digital display teaching base station located at the teaching and training sites. The inconvenience of carrying the software and hardware to classes can thus be eliminated.

The second objective of the invention is to provide an interactive digital display audio/video teaching base station. Through broadband internet connection, the interactive digital display audio/video teaching base station enables audio/video discussion, whiteboard writing and digital data exchange among all interactive digital display audio/video teaching base stations. Furthermore, the first personal digital data base system can simultaneously record and display personal teaching materials stored at the remote second personal digital data base system. The teaching and audio/video conference data can then be accessed via broadband internet at any time, which in turn promotes high quality teaching and efficient learning across different schools, countries and cultures. Moreover, parents who wish to have a better understanding of students' classroom activity can access the interactive teaching base station data through internet or mobile multimedia communication devices.

The third objective of the invention is to provide an interactive digital display audio/video lab environment teaching base station which includes walls containing experiment modules. The processes and results of all experiments conducted within can be observed and recorded by the first personal digital data base system through broadband internet connection. In addition, the processes and results of all experiments performed at labs, clinics, medical training centers etc. can be recorded through a remote monitoring computer system. The recorded data can then be transmitted from the first personal digital data base system to a remote second personal digital data base system. The recorded data can also be broadcasted on the interactive digital display audio/video lab environment teaching base station for in depth observation and discussion. Again, the processes and results of all experiments can be observed real-time via the interactive digital display audio/video teaching base station and multimedia mobile communication devices to enhance experimentation, observation, research and teaching.

The benefits of accomplishing the objectives of the invention will become apparent from the following descriptions and its accompanying figures of which:
FIG. 1 is a side view of a conventional classroom equipped with a whiteboard set, a computer and a projector;
FIG. 2 is a top view of the conventional classroom equipped with a whiteboard set, a computer and a projector;
FIG. 3 is a schematic drawing of an electronic whiteboard;
FIG. 3 (A) is a schematic drawing of a typical audio/video conference;
FIG. 4 is a schematic view of a preferred embodiment of an integrated teaching base station of the invention;
FIG. 4(A) is a block diagram of a second personal digital data base system of the invention;
FIG. 5 is a front view of the first embodiment of an interactive digital display teaching base station of the invention;
FIG. 6 is a cross section view taken along lines 6-6 of FIG. 5;
FIG. 7 is a cross section view taken along lines 7-7 of FIG. 5;
FIG. 8 is a cross section view taken along lines 8-8 of FIG. 5;

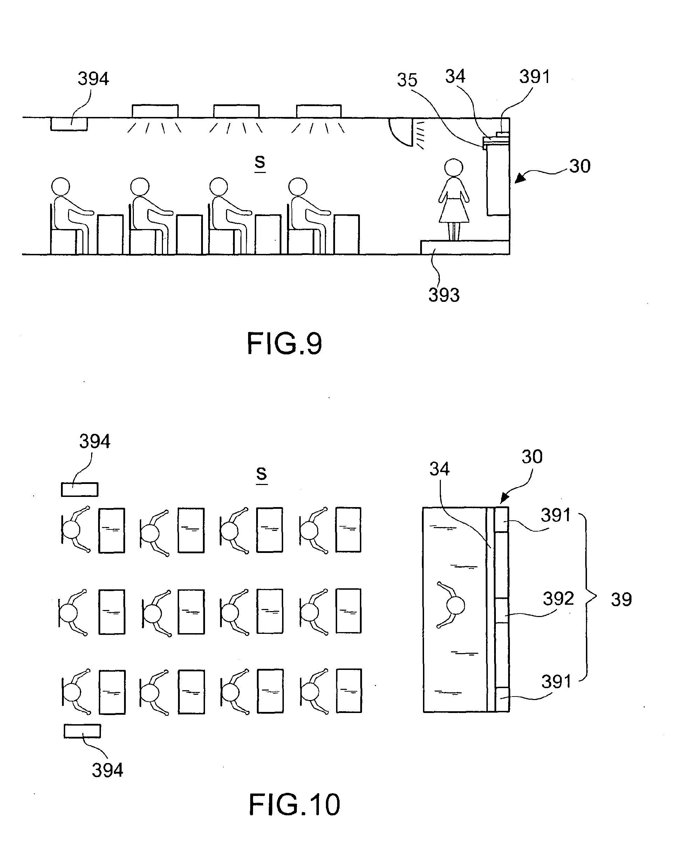

FIG. 9 is a side view of the application of the first embodiment of the invention;
FIG. 10 is a top view of the application of the first embodiment of the invention;
FIG. 11 is a structural drawing of the first embodiment of an integrated teaching base station of the invention;
FIG. 12 is a schematic drawing of the second embodiment of an interactive digital display audio/video teaching base station of the invention;
FIG. 13 is a block diagram of the second embodiment of the invention in connection with a wireless communication network;
FIG. 14 is a structural drawing of the second embodiment of an integrated teaching base station of the invention;
FIG. 15 is a schematic drawing of the third embodiment of an interactive digital display audio/video lab environment teaching base station of the invention;
FIG. 16 is a front view of an experiment module wall of the third embodiment of the invention; and
FIG. 17 is a structural drawing of the third embodiment of an integrated teaching base station of the invention.

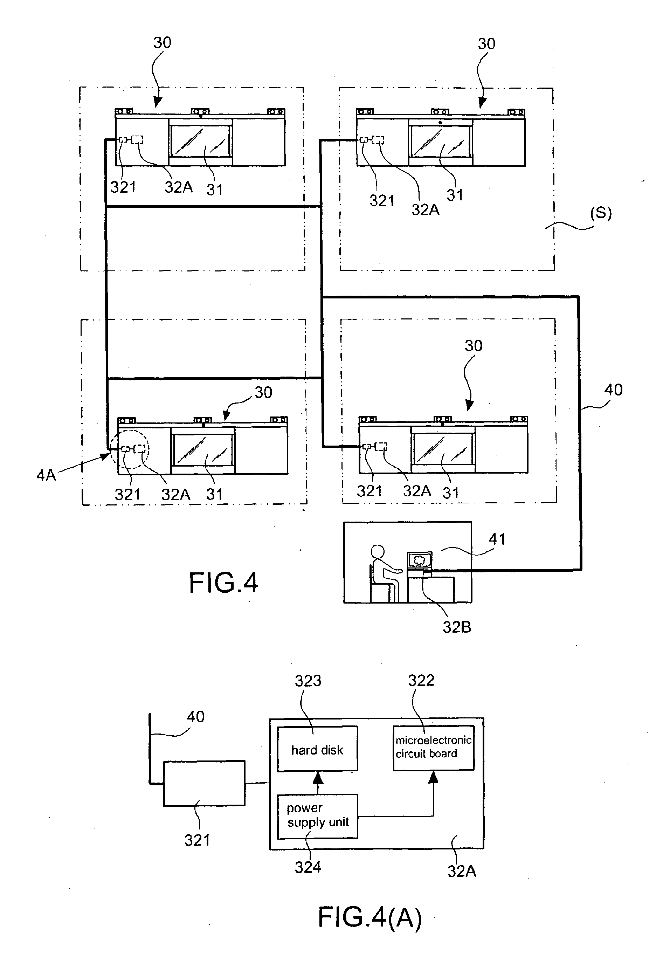

Referring to FIG. 4, the first embodiment of the invention includes at least two interactive digital display teaching base stations (30) and a remote second personal digital data base system (32B) installed on servers, personal computers, etc. (41) Other computer facilities can also be included, details of which are not within the scope of this paper and hence will not be discussed. This application also includes broadband internet connection (40).

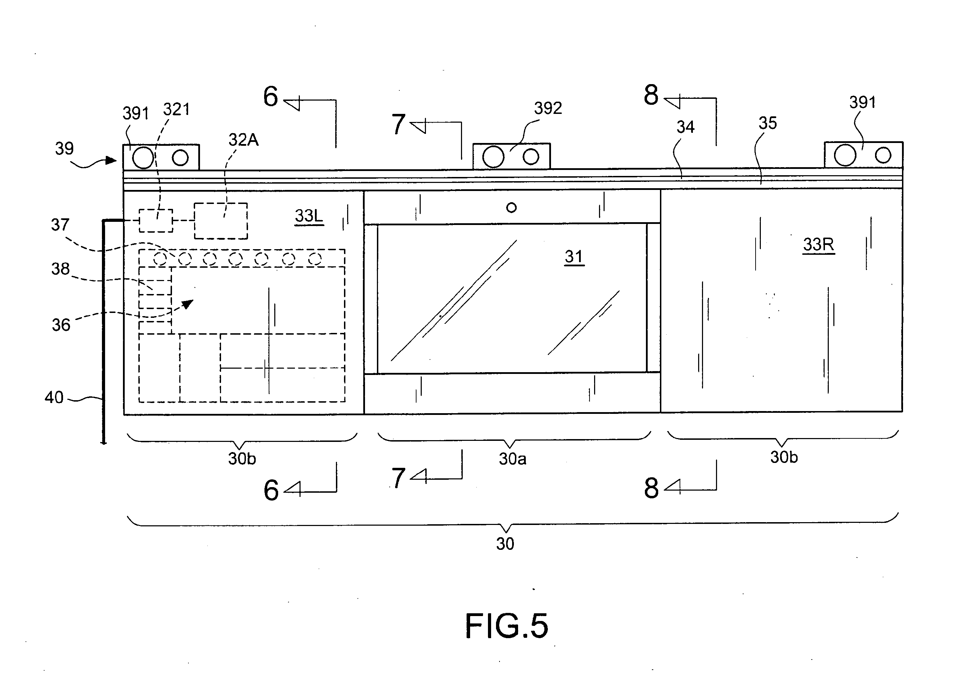

In the integrated teaching base station, the interactive digital display teaching base station (30) is located at the front of all classrooms of the school or training site (S) replacing conventional equipment such as the blackboard or whiteboard, projector, projection screen, notebook computer, etc. A large number of teaching base stations can be installed and used at schools or training sites (S) in various locations, regions or countries. So long as the teacher uses a classroom in which the interactive digital display teaching base station (30) of the invention is installed, he can use the software data compiled and stored for teaching. Refer to FIG. 5. The interactive digital display teaching base station (30) in this application includes a digital display teaching unit (31), a first personal digital data base system (32A) and a broadband internet unit (321). The digital display teaching unit (31) is formed by a large, flat self-luminescent apparatus. The digital display teaching unit (31) can be any of the following: plasma display panel (PDP), various rear projection technologies (including DLP, 3LCD, LCoS, SXRD LCoS, etc.), TFT-LCD screen, organic light-emitting diodes (OLED), etc. A piece of glass can be installed over the digital display teaching unit (31) to allow for additional writing space. The digital display teaching unit (31) can be upgraded with a new display unit as technology advances.

Abbreviations of technical terms used in the preceding text are explained as follows:
DLP : Digital Light Processing
SXRD: Silicon X-tal Reflective Display
LCoS: Liquid Crystal on Silicon
OLED: Organic Light-Emitting Diodes

As shown in FIG. 4A, the first personal digital data base system (32A) consists of a microelectronic circuit board (322) for data storage, a hard disk (323) and a special power supply unit (324). The power supply unit can be either a regular or an uninterrupted power supply (UPS) unit, which continuously supplies power to the first personal digital data base system (32A) so that it is always in service when switched on.

The broadband internet connection (40) (it currently includes network protocols such as IPv4, IPv6, etc. supported by ADSL, cable modem, ISDN, FTTH, etc. More suitable network protocols and facilities may be adopted with technology advancements) is used to connect at least two interactive digital display teaching base stations (30) to the first personal digital data base system (32A) in order to transmit, exchange and access the displayed data. Any interactive digital display teaching base station (30) can access and display the completed personal teaching materials. Moreover, the personal digital teaching materials can be stored at the first personal digital data base system (32A) of any interactive digital display teaching base station (30) or at the remote second personal digital data base system (32B) installed on servers, personal computers, etc. (41) located in the teacher's office, dormitory, lab, etc. These components of the second personal digital data base system (32B) and the first personal digital data base system (32A) will not be described any further. They are switched on and ready for use at all times while maintaining broadband internet connection (40).

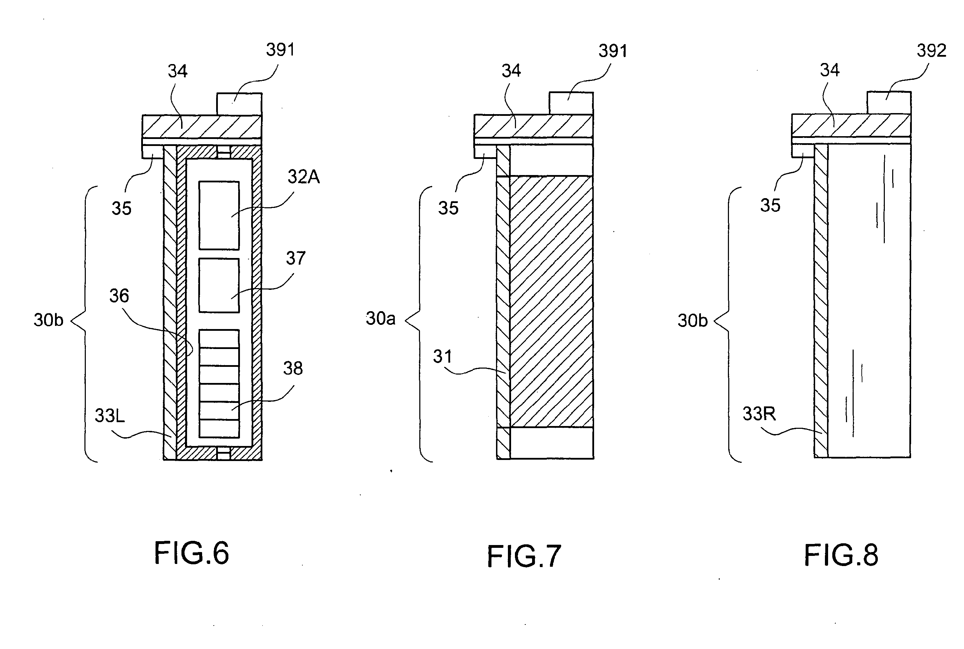

Refer to FIG. 5 together with FIGS. 6-8. In addition to the above mentioned digital display teaching unit (31), the first personal digital data base system (32A) and the broadband internet unit (321), the interactive digital display teaching base station (30) embodiment illustrated in FIGS. 5-8 also includes:
two left and right whiteboards (33L, 33R) installed on either side of the teaching unit (31) and can be made of glass or similar materials;
a metal track (34) extending along any side of the digital display unit (31), the left and right whiteboards (33L, 33R);
a set of electron beam devices (35) attached above the metal track (34);
a sliding compartment (36) which can slide out to provide access to the audio/video input and output unit (37) and the data processing/storage unit (38). In this embodiment the compartment is placed behind the left whiteboard; and
a multi-channel speaker system (39) is provided separately surrounding the digital display teaching unit (31) and the teaching and training site (S).

The above mentioned digital display teaching unit (31) and the moveable or fixed a set of electron beam devices (35) installed on the metal track (34) are combined to form an interactive electronic digital video display teaching board unit (30a). On top of that, the left (33L) and right (33R) whiteboards and the electron beam device are combined to form an electronic whiteboard unit (30b).

Furthermore, at least one electronic whiteboard unit (30b) is integrated with the interactive electronic digital video display teaching board unit (30a), of which the positioning of the whiteboards is flexible.

The audio/video input and output unit (37) installed within the sliding compartment (36) includes a wireless microphone receiver, a speaker control unit, an audio/video player, etc. The data processing/storage unit (38) includes: a printer server, a disk read-write unit, a data storage unit, a web data storage unit, a USB terminal, an IC card input unit, a micro processing circuit board and etc.

The above mentioned audio/video input and output unit (37), data processing/storage unit (38) and backup tools are familiar to those experienced in this technology; therefore no further details will be discussed in this paper.

The multi-channel speaker system (39) consists of a set of left and right front speakers (391) set above the interactive digital display teaching base station (30), a center speaker (392) set at the top middle portion of the interactive digital display teaching base station (30), a subwoofer speaker (393) set underneath the interactive digital display teaching base station (30), and a set of left and right surround sound speakers (394) set on both sides of the interactive digital display teaching base station (30). For practical versatility, the speaker system can be altered, for example, into a dual channel speaker system, 4-channel speaker system, etc. The position of the speakers can also be changed.

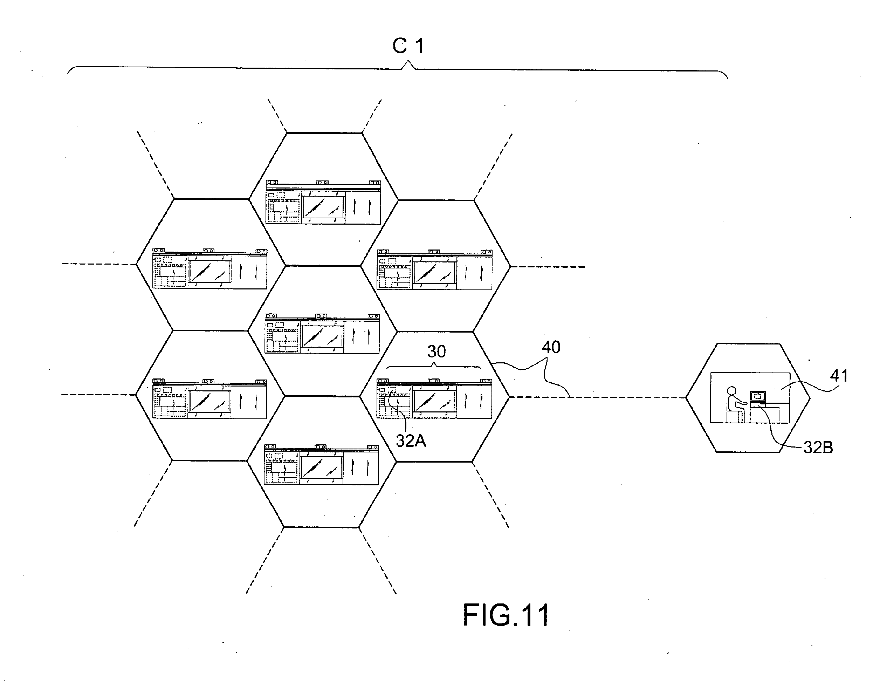

In summary, the first embodiment of the invention is capable of connecting all cells such as the interactive digital display teaching base stations (30) and the remote second personal digital data base system (32B) installed on servers, personal computers etc. (41) via broadband internet connection (40). The basic framework of the integrated teaching base station (C1) as shown in FIG. 11 is formed as a result. Accordingly, the completed digital personal teaching materials can be directly accessed and displayed at the interactive digital display teaching base stations (30) within the teaching and training sites, thus forming flows and exchanges of information that allow all teaching materials to propagate along with the increase of new cells.

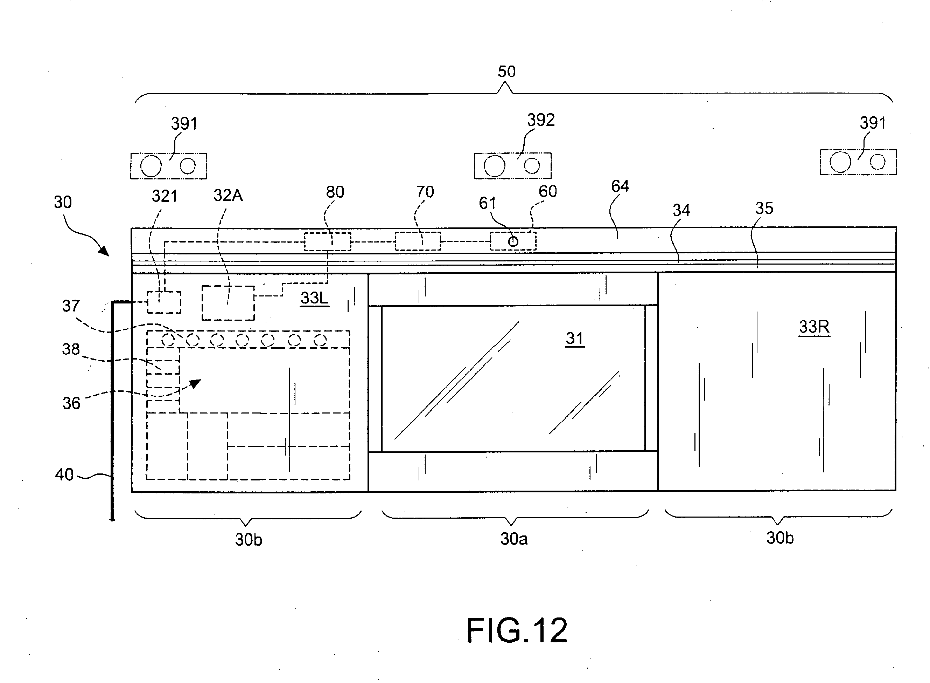

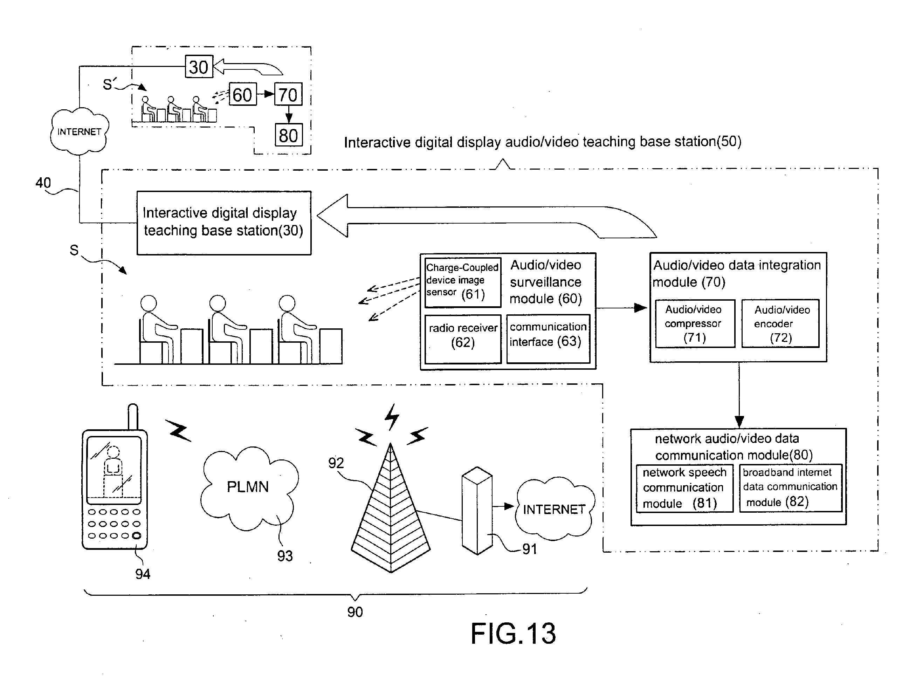

The second embodiment of the invention is shown in FIGS. 12 and 13. The embodiment builds on the platform of the interactive digital display teaching base stations (30) that combines an audio/video surveillance module (60), an audio/video data integration module (70) and a network audio/video data communication module (80). The combination works as an interactive digital display audio/video teaching base station (50) with a module cover (64) located within the unit for aesthetic purpose. With such embodiment setup, it can be used with the interactive digital display audio/video teaching base station (50) for a full duplex audio/video discussion, digital data whiteboard writing, reading, displaying and storage of the personal teaching materials to and from a remote second personal digital data base system (32B), while simultaneously displaying and recording the teaching and meeting data in audio/video format. The set of left and right front speakers (391) and the center speaker (392) can be placed above the module cover (64) or fixed on the wall. The speaker system can be modified into a dual channel speaker system, a 4-channel speaker system, etc. The speakers can also be conveniently repositioned.

As shown in FIG. 13, the audio/video surveillance module (60) is used to transmit teaching and meeting data in audio/video format obtained from the teaching and training site (S) to the interactive digital display teaching base stations (30) at another teaching and training site (S') via broadband internet connection (40). The data processing and storage units of the interactive digital display teaching base station (30) or the first personal digital data base system (32A) are able to process and store teaching and meeting data in audio/video format received and transmitted between these two teaching and training sites (S, S'). An audio/video data integration module (70) can convert the teaching and audio/video meeting data obtained by the audio/video surveillance module (60) from the teaching and training site (S) into a specific format that is compatible with mobile communication and internet transmission, such as MPEG-4, H. 2 64 (MPEG-4 Part 10), GSM-AMR (4.7kbps/12.2kbps) G.726 (32 kbps) and MPEG-4 conforming to the standard of 3GPP release 99, etc. The network audio/video data communication module (80) utilizes the teaching and meeting data in audio/video format transmitted through the audio/video data integration module (70) and the audio/video surveillance module (60) while undergoing a process of a highly efficient compression technology to broadcast using a real-time streaming protocol such as TCP/IP, IP/UPD, HTTP, ICMP, RTP/RTCP, RTSP, PPPoE, NTP, SS7, etc. Live and up-to-date data can therefore be made available for signal-receiving terminals via the internet and all mobile communication standards such as GPRS, 2G, 2.5G, 3G, 4G, WiMAX, etc. Multimedia mobile communication devices (94) such as GSM/GPRS 2G mobile communication unit, GSM/GPRS 2.5G mobile communication unit, GSM/WCDMA dual mode 3G mobile communication unit, WCDMA/UMTS (3G Mobile), GSM/Wi-Fi dual mode mobile communication unit, GSM/WCDMA/Wi-Fi (PDA), GSM/WCDMA/Wi-Fi mobile communication unit, WCDMA/Wi-Fi mobile communication unit, TD-SCDMA 3G standard mobile communication unit, CDMA2000 3G standard mobile communication unit, GPRS enabled mobile communication units, JAVA enabled mobile communication units and JAVA enabled PDA units, 4G standard mobile communication units and WiMAX standard mobile communication units etc. are also supported through WLAN, WiMAX and 3G connections. Audio and video data of the teaching and meeting session can thus be obtained any time.

Abbreviations of technical terms used in the preceding text are explained as follows:
GPRS: General Packet Radio Service.
UMTS: Universal Mobile Telecommunications System.
WCDMA: Wideband Code Division Multiple Access.
WCDMA 3G standard: mainly used in the EU, Japan and all GSM industry.
CDMA2000 3G standard: mainly used in America, Korea and cdmaOne industry.
TD-SCDMA 3G standard: mainly used in the mainland China market.
WiMAX standard: Worldwide Interoperability for Microwave Access, is IEEE 802.16 standard.

The audio/video surveillance module (60) used in the invention may involve a charge-coupled device image sensor (61) or a controllable video camera, a radio receiver (62) and the communication interface (63). The teaching and meeting data obtained through the charge-coupled device image sensor (61) or the controllable video camera and radio receiver (62) is transmitted via the communication interface (63). Modification of the specification of the audio/video surveillance module is possible as technology advances. The charge-coupled device image sensor (61) or the controllable video camera and the communication interfaces are conventional technologies as such no further details will be discussed in this paper.

The audio/video data integration module (70) used in the invention consists of an audio/video compressor (71) and an audio/video encoder (72). It can transmit teaching and meeting data obtained from the charge-coupled device image sensor (61) or the controllable video camera and a radio receiver (62) to the audio/video compressor (71) via the communication interface (63). The teaching and meeting data is then compressed to reduce the volume of data flow and enhance the transmission for a smoother and clearer display. The suitable image compression technologies are: JPEG compressor, MPEG-4 compressor, H.264 compressor and MPEG-4 conforming to the standard of 3GPP release 99, etc. The suitable audio completion technologies are: GSM-AMR (4.7kbps/12.2kbps) compressor, G.726 (32kbps), etc. Modification of the audio/video compression (71) techniques is possible, so as to keep pace with advancing technology. The major function of the audio/video encoder (72) is to encode the audio and video data based on a specific reduction which is adapted to the needs of the internet and internet mobile communication. Generally, the formats for the transmission of audio/video data with mobile communication devices are: CIF, QCIF, QVGA, QQVGA, etc. It is certain that other appropriate formats for the transmission of audio/video data with mobile communication devices are also usable in this invention. Devices and software able to process the aforementioned data formats that are using the broadband internet connection (40) either in wired or wireless manner are readily available in the market. This refers to prior technology hence no further details will be discussed.

The network audio/video data communication module (80) used in the invention may usually include a network speech communication module (81) and a broadband internet data communication module (82). The network audio/video data communication module (80) can connect via WAP Gateway (91) using real-time streaming protocol on the audio/video data, through the external network mobile communication module [including: three base transceiver stations (BTS), one base station controller (BSC) and one mobile switching center (MSC)] (92), to the core network public land mobile network (PLMN) (93) that further connects to the multimedia mobile communication device (94). Likewise, the network speech communication module (81) can connect through landline telephones, mobile phones and any relevant dialing mechanisms. The specifications of the above mentioned units can be modified accordingly as technology advances.

The communications network (90) used in the invention usually includes a wireless application protocol (WAP) gateway (91); a mobile communication module [including: three base transceiver stations (BTS), a base station controller (BSC) and a mobile switching center (MSC)] (92), a public land mobile network (PLMN) (93), a multimedia mobile communication device (94), etc. are connected together. As technology advances (such as GPRS standard, 2G standard, 2.5G standard, 3G standard, 4G standard, WiMAX standard and other mobile communication technologies), the specifications of the above mentioned units can be optimized accordingly.

The multimedia mobile communication devices (94) can be installed with the following supporting units: GSM/GPRS 2G mobile communication unit, GSM/GPRS 2.5G mobile communication unit, GSM/WCDMA dual mode 3G mobile communication unit, WCDMA/UMTS (3G Mobile), GSM/Wi-Fi dual mode mobile communication unit, GSM/WCDMA/Wi-Fi (PDA), GSM/WCDMA/Wi-Fi mobile communication unit, WCDMA/Wi-Fi mobile communication unit, TD-SCDMA 3G standard mobile communication unit, CDMA2000 3G standard mobile communication unit, GPRS enabled mobile communication units, JAVA enabled mobile communication unit, JAVA enabled PDA unit, 4G standard mobile communication unit, WiMAX standard mobile communication units, etc. are also supported. With the continuous advancement of technology (such as 3G standard, 4G standard and other mobile communication technologies), optimized modification of the above mentioned specification is possible. The user of the multimedia mobile communication device (94) can connect via a specific mobile communication network to access the smooth streaming audio/video data on the display monitor and speaker system. As advancing, new technologies may permit, mobile communication devices will be able to view the audio/video meetings. As these are familiar technologies, no further details will not be discussed in this paper.

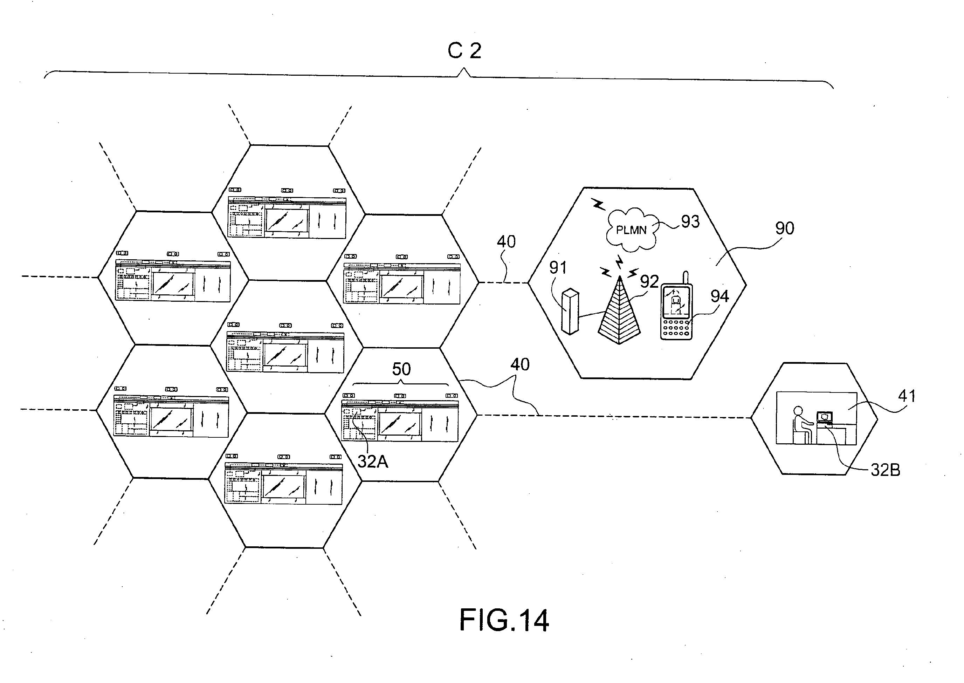

The second embodiment of the invention is capable of connecting all cells such as the interactive digital display audio/video teaching base stations (50) and the remote second personal digital data base system (32B) installed on servers, personal computer, etc. (41) to the communications network (90) via the broadband internet connection (40), forming the basic framework of the integrated teaching base station (C2) as shown in FIG. 14. The integrated teaching base station (C2) facilitates audio/video meetings, whiteboard writing, digital data exchange and remote data storage between the interactive digital display audio/video teaching base stations (50). Furthermore, the personal digital teaching materials and other similar contents stored at the remote second personal digital data base system (32B) can be simultaneously displayed during the teaching and meeting session with optional participation of the multimedia mobile communication unit (94) for observing the teaching and training sites made possible. This enhances in-depth understanding and thus forms flows and exchanges of information that allows all teaching materials to propagate along with the increase of new cells.

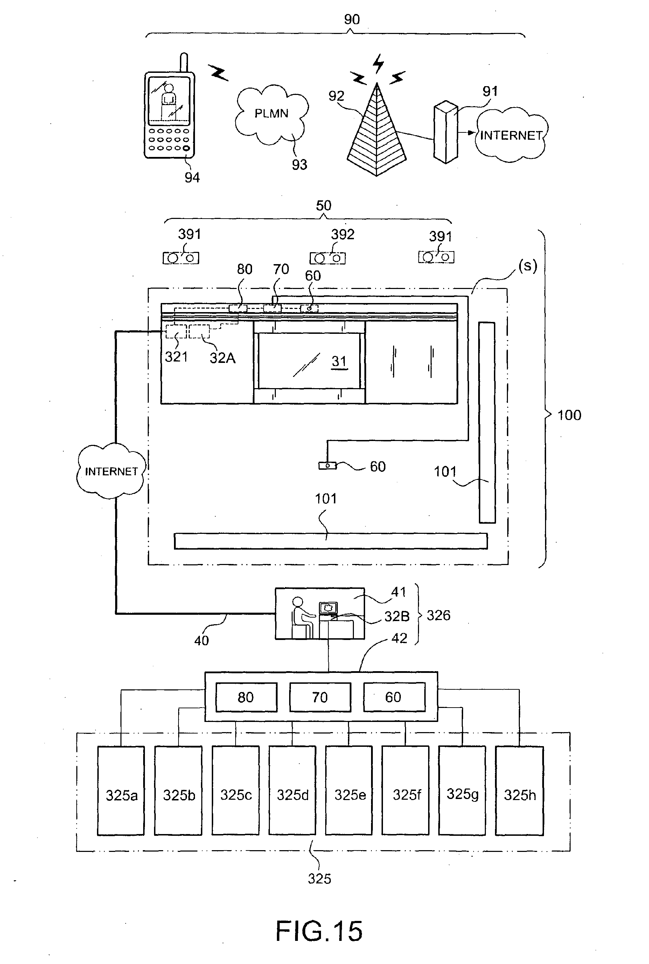

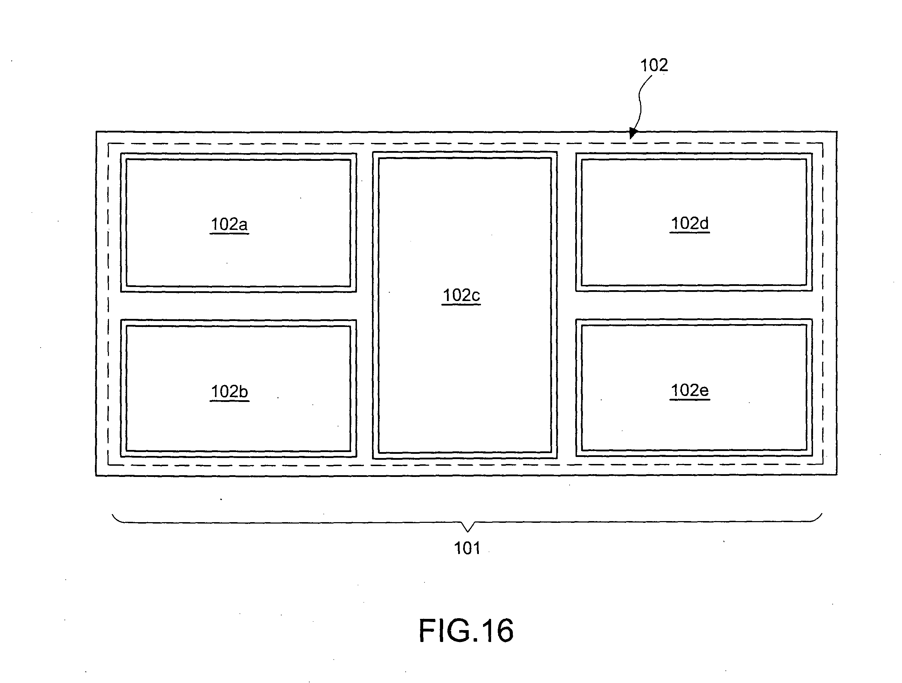

The third embodiment of the invention is shown in FIG. 15 and FIG. 16. The interactive digital display audio/video teaching base station (50) is further combined with experiment modules (102) on an experiment module wall (101) at the teaching and training site (S) to form an interactive digital display audio/video lab environment teaching base station (100). Experiment modules (102) are mounted on the experiment module wall (101) at the teaching and training site (S). Experiment modules (102) can be used as a terrarium module (102a), aquatic animal module (102b), zoology module (102c), bio-tech module (102d), experiment and analysis apparatus (102e), etc. The experiment module wall (101) containing these experiment modules (102) can be mounted on the ceiling, floor and walls of the teaching and training site (S). The experiment module (102) can be conveniently detached from the experiment module wall (101) and rearranged in any combinations. The first personal digital data base system (32A) records the processes and results of all experiments. The stored data can then be displayed using the interactive digital display audio/video teaching base station (50) at the teaching and training site (S) for in depth public observation. Moreover, all recorded or live information of the processes and results of the experiments can be broadcasted on multimedia mobile communication devices (94) for real-time public observation or participation in discussions. The remote monitoring computer system (326) that contains the remote second personal digital base system (32B) is connected to multiple labs (325), such as physics lab (325a), chemistry lab (325b), animal lab (325c), plant lab(325d), microorganism lab (325e), animal/plant factory and ecology lab (325f), clinical teaching operation room (325g) and microorganism incubation room (325h) etc, through broadband internet connection (40). The remote monitoring computer system (326) records the processes and results of all experiments and stores the data to the remote second personal digital data base system (32B) broadband internet connection (40). The stored data can be transmitted and exchanged between the remote second personal digital data base system (32B) and the first personal digital data base system (32A). The experiment data and processes now stored in the first and second personal digital data base system (32A, 32B) can be displayed on the interactive digital display audio/video teaching base station (50) for public observation and discussion at the teaching and training site (S). The recorded or real-time information of the processes and results of all experiments can be observed simultaneously through the interactive digital display audio/video teaching base station (50) and the multimedia mobile communication devices (94). The above mentioned remote monitoring computer system (326) consists of the remote second personal digital data base system (32B) installed in the computer facilities (41) etc., and the audio/video data unit (42) which also contains an audio/video surveillance module (60), an audio/video data integration module (70) and a network audio/video data communication module (80).

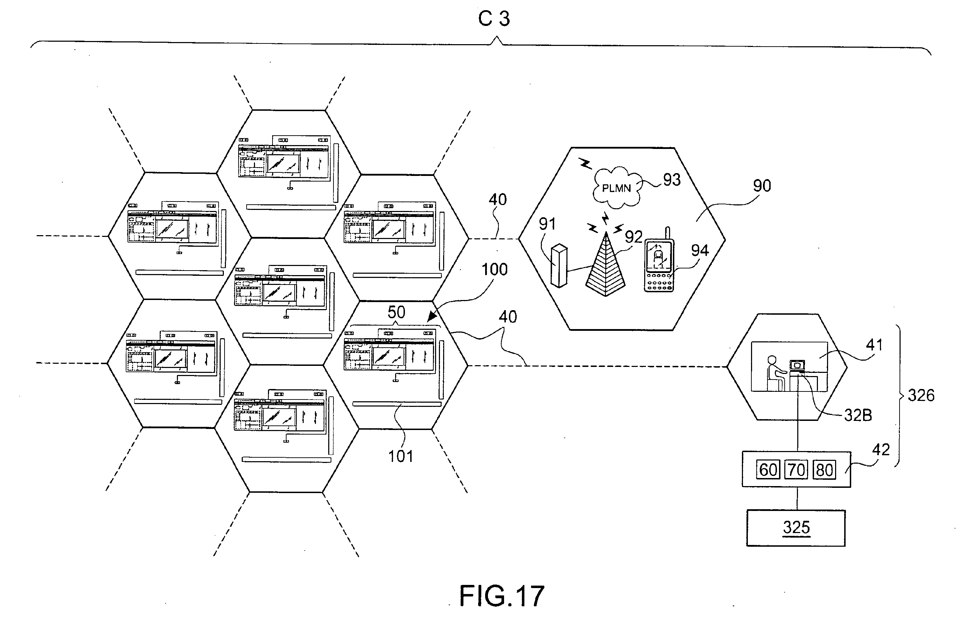

The third embodiment of the invention is capable of connecting all cells such as the interactive digital display audio/video lab environment teaching base stations (100), the remote monitoring computer system (326), all labs (325) and the communications network (90) via broadband internet connection (40). In this way, the basic framework of the integrated teaching base station (C3) as shown in FIG. 17 is formed. The integrated teaching base station (C3) has the function of displaying recorded or real-time information regarding processes and results of all experiments for detailed public observation and discussion on the interactive digital display audio/video teaching base station (50) and the multimedia mobile communication devices (94) simultaneously. Thus, forming flows and exchanges of information that allows all teaching materials to propagate along with the increase of new cells.

In contrast to prior technologies, the invention contributes to the following improvements:
1. The invention allows teaching materials to flow and exchange throughout its network, thereby improving the efficiency and effectiveness of teaching and learning processes.
2. With substantial setups of the invention, the burden of users bringing their computers or storage devices to classes or trainings as well as maintaining the devices when not in use is significantly reduced.
3. The invention is specially design for teaching and training. It is easy to operate in practice. The finished personal digital teaching materials, classroom audio/video data, classroom whiteboard discussion materials and other data can consistently be exchanged and displayed at all interactive digital display teaching base stations (30) for efficient distribution of information.
4. The interactive digital display audio/video teaching base station (50) of the invention can effectively improve usage of space, organization, lighting and teacher-student interaction. Conventional whiteboard writing and note taking is replaced with the interactive digital display audio/video teaching base station (50), which allows students to concentrate on listening to the lectures rather than note taking. Classes that involve audio/video meeting discussions, handwritten digital whiteboard instructions, etc, can still be done on the whiteboard while students concentrate on listening to the lectures. Such electronic device as the interactive digital display audio/video teaching base station (50) can keep a digital record of all information covered during audio/video meetings, whiteboard writing, etc. in an electronic file for efficient learning.
5. The invention through broadband internet connection allows data processed by the first and second personal digital data base systems to be stored and displayed at the interactive digital display audio/video teaching base station (50) for open and detailed observation and discussion. Data can be easily accessed so that classes can continue even if the teacher forgets to bring a data file or urgently needs other data files for teaching.
6. In this time of globalization, the invention has made the "international education" experience possible across schools, countries and cultures through broadband internet at any time for comprehensive exchanges, unlike the common exchanges that take place among only a few students.
7. The invention allows parents to inspect activities at the teaching and training sites (S) through the interactive digital display audio/video teaching base station (50) and the multimedia mobile communication devices, thus enhancing understanding and communication.
8. The invention has made it possible for students to observe all experiments and related processes through the interactive digital display audio/video lab environment teaching base station (100) and the multimedia mobile communication devices. This allows for open observation and discussion so as to achieve the desired results of the experiments.

The invention has demonstrated an unprecedented structure and through the inventor's numerous in-depth tests, the invention has achieved the expected results and effectiveness as well as proven its value in practical applications.

Many similar changes and modifications in the above-described embodiments of the invention can, of course, be carried out without departing from the scope thereof. Accordingly, to promote the progress in science and the useful arts, the invention is disclosed and is intended to be limited only by the scope of the appended claims.

## Claims

1. An integrated teaching base station comprising:
a) at least two interactive digital display teaching base stations (30) each having;
i) at least one large-flat self-luminescent apparatus forming a digital display teaching unit (31); and
ii) a first personal digital data base system (32A) with broadband internet unit (321) installed within; and
b) a broadband internet connection (40) linking at least two units of interactive digital display teaching base stations (30) with each having the first personal digital data base system (32A) for transmitting, accessing and displaying data among the stations, this allows a vast amount of finished personal digital teaching materials to be accessed and displayed at any interactive digital display teaching base station (30), the personal digital teaching materials being storable at the first personal digital data base system (32A).

2. The integrated teaching base station as recited in claim 1 wherein the personal teaching materials can be stored at a remote second personal digital data base system (32B), and wherein the second personal digital data base system (32B) is a combination of microelectronic circuit board (322) for special use of data storage, hard disks (323) and special power supply units (324), and wherein the unit can be installed inside any computer equipment such as servers, personal computers (41), and other units related to computers.

3. The integrated teaching base station as recited in claim 1 wherein the first personal digital data base system (32A) is a combination of microelectronic circuit board (322) for special use of data storage, hard disks (323) and special power supply units (324).

4. The integrated teaching base station as recited in claim 1 wherein the digital display teaching unit (31) is selected from a group consisting of plasma display panel (PDP), rear projection unit, TFT-LCD and OLED, and from a combination thereof.

5. The integrated teaching base station as recited in claim 1 wherein the interactive digital display teaching base station (30) further includes:
a) two left and right whiteboards (33L) (33R) installed on either side (left and right) of the digital display teaching unit(31);
b) a metal track (34) extending along any side of the digital display teaching unit (31) and the left and right whiteboards (33L) (33R);
c) a set of electron beam device (35) attached to the metal track (34);
d) a sliding compartment (36) placed behind the whiteboards for easy installation of the audio/video input/output units (37) and the data processing/storage units (38); and
e) a multi-channel speaker system (39) located on the digital display teaching unit (31) and at one of the teaching and training sites (S).

6. An integrated teaching base station, in particular an interactive digital display audio/video teaching base station (50) comprising:
a) at least two interactive digital display teaching base stations (30) each having;
i) at least one large-flat self-luminescent apparatus forming a digital display teaching unit (31); and
ii) a first personal digital data base system (32A) with a broadband internet unit (321) installed within;
b) a broadband internet connection (40) linking at least two units of interactive digital display teaching base stations (30) with each having the first personal digital data base system (32A) for transmitting, accessing and displaying data among the stations, this allows a vast amount of finished personal digital teaching materials to be accessed and displayed at any interactive digital display teaching base station (30), the personal digital teaching materials being storable at a remote second personal digital data base system (32B);
c) an audio/video surveillance module (60) installed at the interactive digital display teaching base station (30) to obtain teaching and audio/video meeting data, and using the information processing unit, storage unit and the first personal digital data base system (32A) of the interactive digital display teaching base station (30) to process and store records of teaching and audio/video meeting data at the teaching and training sites (S);
d) an audio/video data integration module (70) located at the interactive digital display teaching base station (30) to convert teaching and audio/video meeting data obtained by the audio/video surveillance module (60) into a specific data format that allows a successful transmission of the teaching and audio/video meeting data via broadband internet and wireless communication; and
e) a network audio/video data communication module (80) located at the interactive digital display teaching base station (30) is using real-time streaming protocol for the teaching and audio/video meeting data connecting via an internet service provider (ISP) to a specific mobile communication network (90), the audio/video data can hence be displayed on a user's monitor by means of a multimedia mobile communication device (94) specified by a certain mobile communication network (90).

7. The integrated teaching base station as recited in claim 6 wherein the audio/video surveillance module (60) includes:
a charge-coupled device image sensor (61)/controllable video camera, a radio transceiver (62) and a communication interface (63); and
wherein the audio/video data integration module (71) includes:
an audio/video data compressor (71) to compress the teaching and audio/video meeting data obtained by the audio/video surveillance module (60); and
an audio/video data encoder (72) adapted to encode the compressed teaching and audio/video meeting data; and
wherein the network audio/video data communication module (80) includes a network speech communication module (81) and a broadband internet data communication module (82) that is using real-time streamed protocol for the teaching and audio/video meeting data to be subsequently connected to:
a) the wireless application protocol (WAP) gateway (91) via broadband internet;
b) the core network such as a mobile communication module (92) and public land mobile network (PLMN) (93) via an external network mobile communication module (92); and
c) the multimedia mobile communication device (94); and wherein the multimedia mobile communication devices (94) can be a combination of the following devices: GSM/GPRS 2G mobile communication unit, GSM/GPRS 2.5G mobile communication unit, GSM/WCDMA dual mode 3G mobile communication unit, WCDMA/UMTS (3G Mobile), GSM/Wi-Fi dual mode mobile communication unit, GSM/WCDMA/Wi-Fi (PDA), GSM/WCDMA/Wi-Fi mobile communication unit, WCDMA/Wi-Fi mobile communication unit, TD-SCDMA 3G standard mobile communication unit, CDMA2000 3G standard mobile communication unit, GPRS enabled mobile communication units, JAVA enabled mobile communication units and JAVA enabled PDA units, 4G standard mobile communication unit and W i MAX standard mobile communication units.

8. The integrated teaching base station as recited in claim 6 wherein the interactive digital display audio/video teaching base station (50) further including:
a) at least one experiment modules wall (101) installed at the teaching and training site (S) as part of the interactive digital display audio/video lab environment base station (100) to record and observe the processes and results of all experiments performed on the experiment module wall (1O1), all data obtained from the experiments are recorded and stored at the first personal digital data base system (32A); and
b) multiple labs connected with the remote monitoring computer system at the second personal digital data base system (32B) wherein the processes and results of all experiments are recorded and stored at the remote second personal digital data base system (32B) via broadband internet connection (40), the recorded data of all experiments and processes can transmit and exchange with the first personal digital data base system (32A), in addition, all data with respect to the processes and results of experiments obtained from the first personal digital data base system (32A) and the remote second personal digital data base system (32B) can be displayed at the interactive digital display audio/video teaching base station (50) for a public observation and discussion, and wherein the processes and results of all experiments can be observed in real-time via the interactive digital display audio/video teaching base station (50) and the multimedia mobile communication device (94).
